Europäisches Patentamt

European Patent Office

Office européen des brevets

(19)

(11) Veröffentlichungsnummer: **0 037 536**
**B1**

(12) **EUROPÄISCHE PATENTSCHRIFT**

(45) Veröffentlichungstag der Patentschrift:
01.06.88

(51) Int. Cl.⁴: **B 29 D 31/02, F 16 C 33/14**

(21) Anmeldenummer: **81102327.4**

(22) Anmeldetag: **27.03.81**

(54) **Maschinenelement mit einer harten Lager-bzw. Führungsfläche, Verfahren zu seiner Herstellung und bei dem Verfahren verwendbare Vorrichtung.**

(30) Priorität: **31.03.80 DE 3012487**

(43) Veröffentlichungstag der Anmeldung:
**14.10.81 Patentblatt 81/41**

(45) Bekanntmachung des Hinweises auf die Patenterteilung:
**01.06.88 Patentblatt 88/22**

(84) Benannte Vertragsstaaten:
**AT BE DE FR GB IT NL SE**

(56) Entgegenhaltungen:
**DE - A - 2 329 335**
**FR - A - 2 099 932**
**GB - A - 2 011 028**
**US - A - 1 470 754**
**US - A - 2 622 272**
**US - A - 3 164 645**
**US - A - 3 295 941**
**US - A - 4 169 637**

(73) Patentinhaber: **Schulz, Jürgen, Bergiusstrasse 32-34, D-1000 Berlin 44 (DE)**

(72) Erfinder: **Schulz, Jürgen, Bergiusstrasse 32-34, D-1000 Berlin 44 (DE)**

(74) Vertreter: **Koscholke, Gotthold, Dr.-Ing., Rheinallee 147, D-4000 Düsseldorf 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Maschinenelement mit einer harten Lager- bzw. Führungsfläche, die in eine Einbettmasse aus Kunststoffmaterial eingelagerte harte Körper enthält, welche um einen Betrag ihrer ursprünglichen Höhe abgearbeitet sind, auf ein Verfahren zu seiner Herstellung und auf eine bei dem Verfahren verwendbare Vorrichtung.

In der Technik, namentlich im Maschinenbau, werden in zahlreichen Fällen Flächen benötigt, die im Vergleich zu normalen Eigenschaften von Stahl- oder Nichteisenwerkstoffen bzw. nichtmetallischen Materialien eine erhöhte Härte und dadurch eine grosse Widerstandsfähigkeit gegenüber bestimmten Beanspruchungen aufweisen. Dies gilt z. B. für Lagerflächen, Führungen usw. Es müssen dann solche Stahlsorten verwendet werden, die sich härten lassen, wobei nach dem Härten üblicherweise eine Schleifbearbeitung erfolgt, um einen möglichst guten Endzustand der betreffenden Fläche zu erhalten. Beim Schleifen von gehärteten Werkstücken treten jedoch durch die Wärmebelastungen und sonstige Einflüsse leicht Beeinträchtigungen oder sogar Beschädigungen der Oberfläche bzw. des gesamten Werkstückes ein. Weiterhin ist es oft nicht möglich, auf diese Weise bestimmte Anforderungen an die Formgenauigkeit der Fläche, etwa im Hinblick auf völlige Ebenheit, zu erfüllen. Ganz abgesehen davon sind generell harte und genaue Flächen an Gegenständen aus solchen Werkstoffen, die sich nicht wie Kohlenstoffstähle härten lassen, nicht erzielbar.

Es ist vorgeschlagen worden, verschleissfeste harte Flächen unter Verwendung von Körnern aus Diamant, kubischem Bornitrid oder einem anderen harten Abrasivmaterial herzustellen, (FR-A-2 099 932). Dazu sollen Diamantkörner in Form von Diamantgriess zunächst abgerundet werden, damit keine Spitzen oder scharfen Kanten mehr vorhanden sind. Eine Lage aus solchen abgerundeten Diamantkörnern wird auf einer Unterlage angeordnet und mit einer Matrix aus Metall, Kunststoff oder anderem Bindemittel umgeben. Hierauf erfolgt eine Materialabtragung in einem solchen Masse, dass an den Diamantkörnern Oberflächen als Teile der gewünschten Lagerfläche entstehen. Es soll auf diese Weise eine harte Lagerfläche geschaffen werden, die maximal von Hartstoffkörnern gebildete Partien aufweist. Deshalb wird die Verwendung von Hartstoffpartikeln verschiedener Grössen als vorteilhaft angesehen, mit der Vorstellung, dass sich die grösseren Partikel berühren, während kleinere Partikel die verbliebenen Zwischenräume ausfüllen sollen, um eine möglichst vollständig von Hartstoffkörnern besetzte Fläche zu erhalten. Der verwendete Diamantgriess hat eine sehr kleine Korngrösse. Dies ist nicht nur aus Kostengründen unumgänglich, sondern u.a. auch im Hinblick darauf, dass ein Splittern oder Spalten der Kristalle zumindest weitgehend vermieden wird, was bei grösseren Partikeln unvermeidlich wäre, besonders bei Stossbeanspruchung oder anderer hoher Belastung.

Es ist weiterhin ein elastisches Antriebselement, insbesondere als Antriebswalze für flächige Werkstücke bei der Schuhherstellung, bekannt (GB-A-2 011 028). Dabei sind Kugeln aus leicht zerspanbarem Werkstoff in elastisches Material eingebettet und in der Höhe abgearbeitet. Dies steht in keinem Zusammenhang mit der Erzeugung einer harten Lagerfläche an einem festen Körper.

Aufgabe der Erfindung ist es, bestehende Unzulänglichkeiten und Schwierigkeiten zu beheben und einen Weg zur Herstellung harter Flächen an Objekten verschiedenster Art aufzuzeigen, namentlich auch bei Gegenständen aus nicht in bekannter Weise härtbaren Werkstoffen. Dabei will die Erfindung weiterhin die Möglichkeit bieten, harte Flächen von hoher Formgenauigkeit zu erzielen, so dass dadurch Elemente oder Gegenstände von hoher Präzision geschaffen werden können. Die Erfindung will bei alledem vorteilhafte Ausführungsweisen des Verfahrens und Ausgestaltungen von zur Durchführung des Verfahrens dienenden oder dabei anzuwendenden Vorrichtungen angeben. Weitere Probleme, mit denen sich die Erfindung in Zusammenhang befasst, ergeben sich aus der jeweils erläuterten Lösung.

Ein Maschinenelement mit einer harten Lager- bzw. Führungsfläche, die in eine Einbettmasse aus einem Kunststoffmaterial eingelagerte harte Körper enthält, welche um einen Betrag ihrer ursprünglichen Höhe abgearbeitet sind, kennzeichnet sich gemäss der Erfindung dadurch, dass die harten Körper aus Metall bestehen und im Ausgangszustand Kugeln von gleicher Grösse in der Grössenordnung von Wälzlagerkugeln sind, die einander benachbart angeordnet sind.

Ein solches Element zeichnet sich durch eine Reihe wesentlicher Vorteile aus. Die für die Erzeugung der Fläche verwendeten Kugeln bedürfen keiner mechanischen Vorbereitung wie bei unregelmässig geformten Körpern, sondern es können unmittelbar solche Kugeln verwendet werden, wie sie zu anderen Zwecken erhältlich sind, namentlich Wäzlagerkugeln oder Kugeln für Mahlprozesse. Durch die von Anfang an gegebene gleiche Form wird eine einwandfreie und regelmässige Anordnung erreicht, so dass eine in ihrer ganzen Ausdehnung gleichmässige Fläche entsteht, die eine einheitliche hohe Tragfähigkeit und Belastbarkeit besitzt. Des weiteren wird eine grosse Formgenauigkeit der Lager- bzw. Führungsfläche in ihrer Gesamtheit erzielt. Dies hängt eng mit der Bildung der Fläche durch die Kugelanordnung zusammen, die praktisch eine Aufteilung in viele kleine, aber gleich grosse Einzelflächen darstellt. Dies führt mit der gegebenen Regelmässigkeit zu einem in mehrfacher Hinsicht besonders guten Ergebnis.

Die Erfindung kann harte Flächen an oder auf Gegenständen der verschiedensten Art verkörpern, insbesondere bei Werkstücken der industriellen Technik, Maschinenteilen od.dgl., wobei ganz unterschiedlichen Bedingungen Rechnung getragen werden kann und harte Flächen auch an solchen Gegenständen vorgesehen werden können, die selbst nicht hart sind. Weiterhin sind auch Reparaturen günstig möglich.

Als Einbettmasse werden solche Materialien verwendet, die geeignet sind, den Kugeln den notwendigen Halt zu geben. Darüber hinaus kann die Einbettmasse Eigenschaften aufweisen, die für den jeweiligen Anwendungsfall günstig sind bzw. besondere Anforderungen des betreffenden Bedarfsfalls erfüllen, etwa hinsichtlich der Druckfestigkeit. Insbesondere kommen als Einbettmasse Kunstharze in Betracht, so namentlich Epoxid- oder Polyesterharze, ggfs. mit Zusatz von Stahl, Bronze oder einem anderen Metall in zerkleinerter Form bzw. als Pulver.

Bei einem vorteilhaften Verfahren zur Herstellung eines Maschinenelements der genannten Art wird Einbettmasse in streichfähigem oder plastischem Zustand auf eine Fläche aufgetragen, worauf dann die Kugeln darin durch Eindrücken od.dgl. eingefügt werden. Es ist aber auch möglich, zunächst die Kugeln auf einer Unterlage anzuordnen und sie dann zumindest teilweise mit der Einbettmasse zu umgeben, etwa durch Vergiessen, wobei sich die Einbettmasse in einem flüssigen oder fliessfähigen Zustand befindet.

Als Unterlage beim Ineinanderfügen von Einbettmasse und Kugeln kann insbesondere ein Gegenstand, der die harte Fläche aufweisen soll, selbst verwendet werden. Wird eine gesonderte Unterlage verwendet, so kann die erhärtete Einbettmasse mit den Kugeln zusammen mit der Unterlage auf den Gegenstand, der die harte Fläche aufweisen soll, aufgebracht und auf diesem befestigt werden, z.B. durch Kleben, oder die erhärtete Einbettmasse mit den Kugeln kann von der Unterlage getrennt und dann auf den Gegenstand aufgebracht und an diesem befestigt bzw. mit ihm verbunden werden. Das Abarbeiten der eingebetteten Kugeln kann in den genannten Fällen vor dem Aufbringen auf den betreffenden Gegenstand erfolgen. Vorzugsweise wird dieses Abarbeiten jedoch nach dem Aufbringen auf den Gegenstand durchgeführt, insbesondere, wenn die harte Fläche in ihrer Zuordnung oder Lage auf dem Gegenstand besondere Anforderungen oder Genauigkeitsansprüche erfüllen soll.

In den verschiedenen erläuterten Fällen, sei es, dass das Ineinanderfügen von Einbettmasse und Kugeln auf dem betreffenden Gegenstand selbst erfolgt, sei es, dass ein getrennt hergestelltes Element aus der Einbettmasse mit den Kugeln auf einen Gegenstand aufgebracht wird, sei es, dass es sich um eine Unterlage zur Aufnahme der Einbettmasse und/oder der Kugeln handelt, kann es von Vorteil sein, in dem betreffenden Objekt eine Ausnehmung, Vertiefung od.dgl. vorzusehen, die dann die Einbettmasse oder die Kugeln oder nach dem Aushärten der Einbettmasse beide zusammen mit oder ohne Unterlage aufnimmt.

In weiterer Ausgestaltung des Verfahrens sieht die Erfindung vor, dass die Kugeln zunächst auf einem Träger angeordnet und dann mittels des Trägers in die Einbettmasse eingebracht werden.

Dies ermöglicht es in einfacher und zweckmässiger Weise die Kugeln so einander zuzuordnen, wie es für das Einbetten in die Einbettmasse erwünscht oder von Vorteil ist. Der Träger kann starr oder aber auch flexibel sein. Letzteres ist u.a. dann von Vorteil, wenn eine nicht ebene Fläche erzeugt werden soll, z.B. eine zylindrische Fläche.

Eine vorteilhafte Vorrichtung zur Durchführung des erläuterten Verfahrens kennzeichnet sich gemäss der Erfindung durch eine Auflage für die Anordnung der Kugeln vor ihrem Einbringen in die Einbettmasse und durch einen die Auflage begrenzenden, relativ zu ihr verschiebbaren Rahmen od.dgl. Die Auflage und das mit der Einbettmasse versehene Objekt sind zur Durchführung des Einbettvorganges gegeneinander bewegbar, zweckmässig unter Verwendung einer Führung, wobei der verschiebbare Rahmen die Kugeln bis zum Eindringen in die Einbettmasse in der gegebenen Anordnung hält.

Die Auflage kann starr oder flexibel sein. Im letztgenannten Fall kann sie während der Anordnung der Kugeln auf ihr auf einer ebenen oder auch gekrümmten Abstützung aufruhen.

Die Erfindung sieht weiterhin einen vorzugsweise flexiblen oder biegsamen Träger für die Kugeln vor ihrem Einbringen in die Einbettmasse vor. Ein solcher eignet sich insbesondere für die Herstellung von harten Oberflächen mit von der Ebene abweichender Form, z.B. einer zylindrischen Form. In einem solchen Fall ist der Träger oder eine Auflage zweckmässig wenigstens auf einer Seite mit einer Kleberschicht versehen, welche die Kugeln in der gewünschten Anordnung beim Einbringen in die Einbettmasse und bis zum Erhärten der letzteren festhält. Eine solche Kleberschicht lässt sich auch bei einer Auflage oder einem Träger anderer Art, so einer starren Auflage oder einem starren Träger, vorsehen. Es kann dann ein die Auflage umgebender Raum entfallen bzw. ein solcher ist nur so lange der Auflage zugeordnet, bis die Kugeln darauf in der gewünschten Weise angeordnet sind. Es kann aber abgenommen werden, worauf sich die Auflage mit den durch die Klebung gehaltenen Kugeln frei handhaben oder auch in einer geführten Bewegung auf ein mit der Einbettmasse versehenes Objekt auflegen lässt. Nach dem Hartwerden der Einbettmasse kann die Auflage mit der Kleberschicht im Bedarfsfall leicht abgezogen werden. Das gleiche gilt für einen entsprechenden Träger.

Weitere Einzelheiten und Vorteile der Erfindung ergeben sich aus der nachstehenden Erläuterung von Ausführungsbeispielen, aus der zugehörigen Zeichnung und aus den Ansprüchen. Es zeigen:

Fig. 1 einen Schnitt durch ein Element gemäss der Erfindung nach der Linie I–I in Fig. 2,

Fig. 2 eine Draufsicht auf einen Teil des Elements,

Fig. 3 einen der Fig. 1 entsprechenden Schnitt durch ein Element in abgewandelter Ausführung,

Fig. 4 einen Ausschnitt aus einem mit einer harten Fläche ausgestatteten Gegenstand in grösserem Massstab,

Fig. 5 eine Draufsicht auf einen mit einer harten Fläche versehenen Maschinenteil,

Fig. 6 einen Schnitt nach der Linie VI–VI in Fig. 5,

Fig. 7 eine Ausführung einer Vorrichtung gemäss der Erfindung im Schnitt,

Fig. 8 eine weitere Ausführungsform der Vorrichtung,

Fig. 9 eine abgewandelte Ausführung der Vorrichtung und

Fig. 10 einen Gegenstand vor der Fertigstellung einer harten Fläche im Teilschnitt.

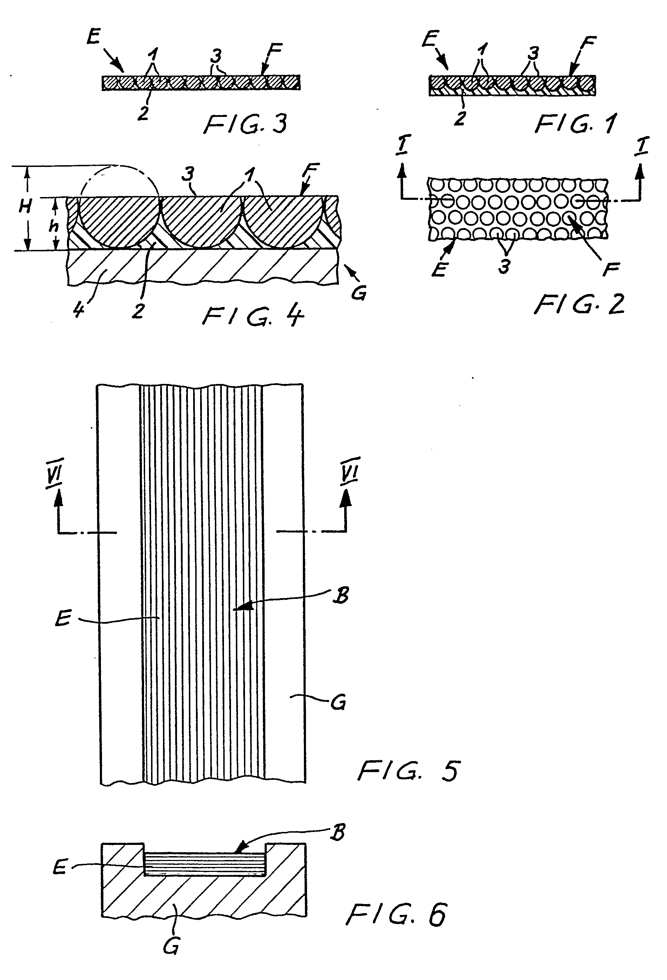

Die Fig. 1 und 2 zeigen einen Teil eines nach dem Verfahren gemäss der Erfindung hergestellten Elements E. In einer ausgehärteten Einbettmasse 2, die z.B. ein Epoxidharz oder ein Polyesterharz ist, ggfs. mit Zusatz von Bronze- oder Stahlpulver, sind Kugeln 1 gleicher Form und Grösse gehalten, die eine Härte von 65 bis 68 Rockwell C haben. Es kann sich z.B. um Wäzlagerkugeln handeln. Diese Kugeln sind auf einem Teil ihrer Höhe nach dem Erhärten der Einbettmasse abgeschliffen, so dass sich eine Vielzahl von einander benachbarten Stirnflächen 3 (Fig. 2) ergibt, die in ihrer Gesamtheit die harte Oberfläche F des Elements bilden.

Bei der Ausführung nach Fig. 1 weist das Element E unter den Kugeln 1 noch einen nur von der Einbettmasse 2 gebildeten Bereich auf, dessen Höhe dem jeweiligen Bedarfsfall entsprechend gewählt werden kann.

Bei der Ausführung nach Fig. 3, die im übrigen derjenigen nach Fig. 1 und 2 entspricht und bei der die Teile mit denselben Bezugsziffern bezeichnet sind, fehlt ein solcher unterer Bereich.

Ein Element E der erläuterten Art kann z.B. durch Kleben oder auch durch Einklemmen oder auf andere geeignete Weise an einem Maschinenteil festgelegt sein. Dadurch kann beispielsweise eine in einem Grundkörper G angeordnete harte Führungsbahn B für den Schlitten einer Werkzeugmaschine gebildet sein, wie Fig. 5 und 6 veranschaulichen.

Statt durch Einsetzen eines vorgefertigten Elements kann eine solche Führungsbahn oder eine sonstige harte Fläche an einem Gegenstand auch unmittelbar an diesem hergestellt sein. Wird z.B. Fig. 4 als Schnitt durch eine Führungsbahn ähnlich derjenigen nach Fig. 5 und 6 entlang der Mittelebenen von eingebetteten Kugeln aufgefasst, so ist erkennbar, dass die Kugeln 1 sich auf dem Grund 4 einer Ausnehmung des Maschinenteils G abstützen und von einer Einbettmasse 2 umgeben sind. Nach dem Erhärten der letzteren sind die Kugeln von der strichpunktiert angedeuteten ursprünglichen Höhe H (Durchmesser) auf die endgültige Höhe h durch Schleifen oder einen anderen Bearbeitungsprozess abgetragen worden. Dadurch ergibt sich aus der Vielzahl der einzelnen Stirnflächen 3 dieser abgetragenen Kugeln 1 insgesamt die harte Fläche F als Führungsbahn od. dgl., wobei die dazwischenliegenden Bereiche der Einbettmasse, die an der Oberseite noch in Erscheinung treten, gering sind. In Fig. 2 ist dies zur besseren Veranschaulichung übertrieben dargestellt. Die abgearbeitete Höhe H-h kann insbesondere im Bereich von 25 bis 50% liegen.

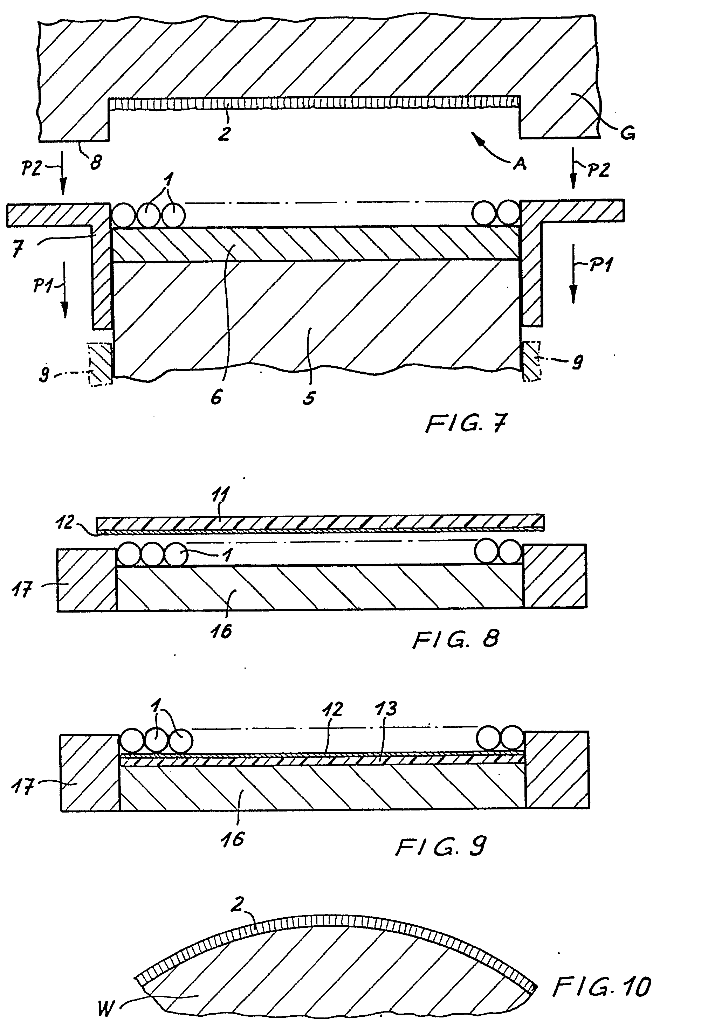

Die Herstellung einer harten Fläche F, etwa der in Fig. 4 im Endzustand wiedergegebenen Art, wird anhand der Fig. 7 erläutert, die zugleich eine zweckmässige Vorrichtung zur Durchführung des Verfahrens zeigt. In dem Gegenstand G, der mit der harten Fläche versehen werden soll, ist zunächst durch einen üblichen Bearbeitungsvorgang oder auch durch sonstige Formgebung, etwa durch Giessen, eine Ausnehmung A vorgesehen worden, die in Richtung senkrecht zur Zeichenebene eine gewünschte Länge haben kann. Die Vorrichtung weist auf einem Untersatz 5 od. dgl. für eine z.B. aus Stahl oder einem anderen Material bestehende Auflage 6 auf, die von einem Rahmen 7 umgeben ist. Die Auflage 6 und der Rahmen 7 haben zweckmässig annähernd dieselben Abmessungen wie die Ausnehmung A bzw. wie der mit der harten Fläche versehende Bereich am Gegenstand G. Der Rahmen 7 ist in Richtung der Pfeile P1 verschiebbar, wird aber, solange in dieser Richtung keine Kraft auf ihn wirkt, durch Reibschluss oder zusätzliche Mittel am Untersatz 5 gehalten. In der Ausgangslage steht der Rahmen 7 um einen solchen Betrag über die Oberseite der Auflage 6 vor, dass seine Innenseiten eine Randbegrenzung für die auf der Auflage 6 anzuordnenden harten Körper, namentlich Kugeln 1 bilden. Die Kugeln werden vorteilhaft so angeordnet, dass sie sich jeweils untereinander berühren. Es wird nun in den Grund der Ausnehmung A des Gegenstandes G eine Einbettmasse 2, z.B. ein Kunstharz, eingebracht, etwa durch Aufstreichen der eine entsprechende Konsistenz aufweisenden Masse mit einem Kammspachtel. Sodann wird der Gegenstand G, der ggfs. von einem vertikal an einer Führung verschiebbaren nicht dargestellten Schlitten od. dgl. gehalten ist, in Richtung der Pfeile P2 abwärts bewegt. Dabei legen sich die neben der Ausnehmung A liegenden Flächen 8 auf die Oberseite des Rahmens 7 auf und verschieben diesen mit nach unten, so dass die Kugeln 1 in die Ausnehmung A hineingeführt und in die Einbettmasse 2 eingedrückt werden, die die Kugeln dabei völlig umschliesst. Die Teile können dann in dieser Lage verbleiben, bis die Einbettmasse ausgehärtet ist. Wird dann der Gegenstand G abgenommen, bleibt die Auflage 6 zurück, während die ausgehärtete Einbettmasse mit den Kugeln fest an dem Gegenstand G sitzt. Hierauf kann das Abarbeiten der Kugeln durch Schleifen od. dgl. erfolgen, so dass sich etwa der Zustand nach Fig. 4 ergibt. Es ist natürlich auch möglich, den Gegenstand G bei dem erläuterten Vorgang feststehen zu lassen und stattdessen den Untersatz 5 mit der Auflage 6 und dem Rahmen 7 an einer strichpunktierten Führung 9 aufwärts zu bewegen, etwa nach Art eines Hubtisches od. dgl.

In Fig. 8 ist eine Vorrichtung dargestellt, bei der die Kugeln 1 oder andere harte Körper wiederum auf einer Auflage 16 angeordnet werden können, wobei diese von einem Rahmen oder einer Einfassung 17 zur seitlichen Begrenzung umgeben ist. Diese Einfassung 17 kann relativ zur Auflage 16 verschiebbar oder auch feststehend sein. Um die auf der Auflage 16 angeordneten Kugeln 1 an diejenige Stelle zu überführen, an der sie in die Einbettmasse eingefügt werden, insbesondere auf dem mit der harten Fläche auszustattenden Gegenstand selbst, ist ein Träger 11 vorgesehen, z.B. eine Metall- oder Kunststoffplatte, die auf einer Seite mit einer Kleberschicht 12 versehen ist. Diese Kleberschicht ist zweckmässig ein beidseitig mit einem Kleber beschichtetes Blatt, das somit auf dem Träger festgelegt und bei Bedarf auch wieder von diesem abgezogen werden kann. Mit der freiliegenden Seite der Kleberschicht 12 können die Kugeln 1 in der gegebenen Anordnung von der Auflage 16 abgehoben und zur Stelle der weiteren Verwendung gebracht werden.

Die Ausführung der Vorrichtung nach Fig. 9 unterscheidet sich von derjenigen nach Fig. 8 im wesentlichen dadurch, dass hier ein Träger 13 mit einer zumindest aussenseitig selbstklebenden Schicht 12 auf der Auflage 16 lose Aufnahme findet, derart, dass er nach dem Aufbringen der Kugeln 1 zusammen mit diesen herausgenommen und an die Verwendungsstelle gebracht werden kann. Um das Herausnehmen zu erleichtern, kann die Einfassung 17 wenigstens auf einer Seite abnehmbar sein.

Die Träger 11 und 13 können auch flexibel sein, z.B. aus einem Gummituch oder einer Kunststoff-Folie bestehen, derart, dass sie sich einer von der ebenen Form abweichenden Gestalt eines Gegenstandes anpassen können, der mit der harten Oberfläche ausgestattet werden soll. Dies kann z.B. eine Welle W oder ein anderer zylindrischer oder eine sonstige Raumform aufweisender Gegenstand sein, der zunächst mit einer geeigneten Menge an Einbettmasse 2 beschichtet wird, worauf dann die durch die Klebung lösbar am flexibel oder biegsamen Träger 11 bzw. 13 befindlichen Kugeln 1 darin eingedrückt werden können.

Es fällt auch in den Rahmen der Erfindung, dass ein starrer Träger vorhanden ist, der die gewünschte Raumform aufweist, etwa Zylinderform, wobei die Auflage für die Kugeln entsprechend geformt ist. Auch kann es zweckmässig sein, eine der Form des betreffenden Gegenstandes entsprechend gestaltete Auflage zusammen mit einem flexiblen Träger vorzusehen und zu verwenden.

## Patentansprüche

1. Maschinenelement mit einer harten Lager- bzw. Führungsfläche (F), die in eine Einbettmasse (2) aus einem Kunststoffmaterial eingelagerte harte Körper (1) enthält, welche um einen Betrag ihrer unsprünglichen Höhe (H) abgearbeitet sind, dadurch gekennzeichnet, dass die harten Körper aus Metall bestehen und im Ausgangszustand Kugeln (1) von gleicher Grösse in der Grössenordnung von Wälzlagerkugeln sind, die einander benachbart angeordnet sind.

2. Maschinenelement nach Anspruch 1, dadurch gekennzeichnet, dass die abgearbeitete Höhe (H–h) im Bereich von 25% bis 50% des Kugeldurchmessers liegt.

3. Verfahren zur Herstellung eines Maschinenelements mit einer harten Lager- bzw. Führungsfläche nach einem der Ansprüche 1 und 2, bei dem die harten Körper (1) mit Einbettmasse (2) umgeben werden, die letztere zur Verfestigung gebracht wird und das dadurch entstandene Substrat in dem Masse in der Höhe abgearbeitet wird, dass an den harten Körpern (1) Oberflächen zur Bildung der harten Lager- bzw. Führungsfläche freigelegt werden, dadurch gekennzeichnet, dass Einbettmasse (2) auf eine Fläche aufgetragen wird und Kugeln (1) darin eingefügt werden.

4. Verfahren nach Anspruch 3, dadurch gekennzeichnet, dass in einem zur Aufnahme der Einbettmasse (2) und/oder der Kugeln (1) bzw. beiden bestimmten Objekt (G) eine Ausnehmung (A), Vertiefung od. dgl. hergestellt wird.

5. Verfahren nach einem der Ansprüche 3 und 4, dadurch gekennzeichnet, dass die Kugeln (1) zunächst auf einem Träger (11; 13) angeordnet und dann mittels des Trägers (11; 13) in die Einbettmasse (2) eingebracht werden.

6. Verfahren nach Anspruch 5, dadurch gekennzeichnet, dass ein im wesentlichen starrer Träger (11; 13) verwendet wird.

7. Verfahren nach Anspruch 5, dadurch gekennzeichnet, dass ein im wesentlichen flexibler Träger (11; 13) verwendet wird.

8. Verfahren zur Herstellung eines Maschinenelements oder ähnlichen technischen Objekts mit einer harten Lager- bzw. Führungsfläche nach einem der Ansprüche 1 und 2, bei dem die harten Körper (1) auf einer Unterlage angeordnet und mit Einbettmasse (2) umgeben werden, die letztere zur Verfestigung gebracht wird und das dadurch entstandene Substrat in dem Masse in der Höhe abgearbeitet wird, dass an den harten Körpern (1) Oberflächen zur Bildung der harten Lager- bzw. Führungsfläche freigelegt werden, dadurch gekennzeichnet, dass das Substrat aus verfestigter Einbettmasse (2) und Kugeln (1) zusammen mit der Unterlage auf einen mit der Lager- bzw. Führungsfläche zu versehenden Gegenstand (G) aufgebracht wird.

9. Verfahren nach Anspruch 8, dadurch gekennzeichnet, dass das Abarbeiten des Substrats nach dem Aufbringen auf den Gegenstand (G) durchgeführt wird.

10. Vorrichtung zum Einfügen von Kugeln (1) in eine Einbettmasse (2) beim Verfahren nach einem der Ansprüche 3 bis 7, dadurch gekennzeichnet, dass wenigstens ein relativ zu einem anderen Teil (G) an einer Führung (9) bewegbarer Teil (5) vorgesehen ist, wobei einer der Teile (5 bzw. G) eine von einem Rahmen (7, 17) od. dgl. begrenzte Auflage (6, 16) für die Kugeln (1) vor ihrem Einbringen in die Einbettmasse (2) aufweist.

11. Vorrichtung nach Anspruch 10, gekennzeichnet durch einen eine Auflage (6, 16) für die Kugeln (1) begrenzenden, relativ zur Auflage (6, 16) verschiebbaren Rahmen (7) od. dgl.

12. Vorrichtung nach Anspruch 10, dadurch gekennzeichnet, dass die Auflage (6, 13) wenigstens auf der die Kugeln (1) aufnehmenden Seite mit einer Kleberschicht versehen ist.

13. Vorrichtung nach Anspruch 10, gekennzeichnet durch einen wenigstens auf einer Seite mit einer Kleberschicht (12) versehenen bewegbaren Träger (11, 13) für die Kugeln (1).

14. Vorrichtung nach Anspruch 13, dadurch gekennzeichnet, dass der Träger (11, 13) flexibel oder biegsam ist.

**Claims**

1. Machine element with a hard bearing or guiding surface (F), which contains hard bodies (1) embedded in an embedding mass (2) of plastics material, which bodies are reduced by a fraction of their original height (H), characterised in that the hard bodies are made of metal and in the initial state are balls (1) of equal size, of the order of magnitude of roller bearing balls, which are disposed adjacent one another.

2. Machine element according to Claim 1, characterised in that the reduced height (H–h) is in the range of 25% to 50% of the ball diameter.

3. Process for the production of a machine element with a hard bearing or guiding surface according to one of Claims 1 and 2, wherein the hard bodies (1) are surrounded with embedding mass (2), which mass is caused to solidify and the substrate thus produced is reduced in height to such an extend that on the hard bodies (1) surfaces are exposed to form the hard bearing or guiding surface, characterised in that embedding mass (2) is applied to a surface and balls (1) are inserted in it.

4. Process according to Claim 3, characterised in that, in an object (G) for receiving the embedding mass (2) and/or the balls (1) or both, a recess (A), depression or the like is produced.

5. Process according to one of Claims 3 and 4, characterised in that the balls (1) are first arranged on a support (11; 13), and then introduced into the embedding mass (2) by means of the support (11; 13).

6. Process according to Claim 5, characterised in that an essentially rigid support (11; 13) is used.

7. Process according to Claim 5, characterised in that an essentially flexible support (11; 13) is used.

8. Process for the production of a machine element or like technical object with a hard bearing or guiding surface according to one of Claims 1 and 2, wherein the hard bodies (1) are arranged on a base and surrounded with embedding mass (2), the latter is caused to solidify and the substrate so produced is reduced in height to such an extent that on the hard bodies (1) surfaces are exposed to form the hard bearing or guiding surface, characterised in that the substrate made of solidified embedding mass (2) and balls (1) along with the base are applied to an object (G) to be provided with the bearing or guiding surface.

9. Process according to Claim 8, charachterised in that the reduction of the substrate is carried out after application to the object (G).

10. Apparatus for insertion of balls (1) in an embedding mass (2) in the process according to one of Claims 3 to 7, characterised in that at least one part (5) movable in relation to another part (G) on a guide (9) is provided, whereby one of the parts (5 or G) has a support surface (6, 16) defined by a frame (7, 17) or the like for the balls (1) before they are inserted in the embedding mass (2).

11. Apparatus according to Claim 10, characterised by a frame (7) or the like defining a support surface (6, 16) for the balls (1), slidable in relation to the support surface (6, 16).

12. Apparatus according to Claim 10, characterised in that the support surface (6, 13) at least on the side receiving the balls (1) is provided with a layer of adhesive.

13. Apparatus according to Claim 10, characterised by a movable support (11, 13) for the balls (1), which support is provided on at least one side with a layer of adhesive (12).

14. Apparatus according to Claim 13, characterised in that the support (11, 13) is flexible or bendable.

**Revendications**

1. Elément de machine possédant une face dure, portante ou de guidage (F) contenant des corps durs (1) qui sont noyés dans une masse d'enrobage (2) en matière plastique et dont une partie de la hauteur initiale (H) a été supprimée par enlèvement de matière, caractérisé en ce que les corps durs sont en métal et sont, à l'état initial, des billes (1) de même taille, du même ordre de grandeur que les billes de paliers à roulement, qui sont disposées au voisinage les unes des autres.

2. Elément de machine selon la revendication 1, caractérisé en ce que la hauteur supprimée par enlèvement de matière (H–h) se situe dans l'intervalle de 25 à 50% du diamètre des billes.

3. Procédé de fabrication d'un élément de machine possédant une surface dure, portante ou de guidage selon l'une des revendications 1 et 2, dans lequel les corps durs (1) sont emprisonnés dans la masse d'enrobage (2), cette dernière est amenée à se solidifier et la hauteur du substrat qui en résulte est diminuée par enlèvement de matière au point de mettre à jour, sur les corps durs (1), des surfaces capables de former la face dure, portante ou de guidage, caractérisé en ce que la masse d'enrobage (2) est placée sur une surface et que des billes (1) y sont insérées.

4. Procédé selon la revendication 3, caractérisé en ce qu'on pratique un évidement (A), cavité ou autre dans une pièce (G), destinée à recevoir la masse d'enrobage (2) et/ou les billes (1) ou les deux.

5. Procédé selon l'une des revendications 3 et 4, caractérisé en ce que les billes (1) sont d'abord disposées sur un support (11; 13) et ensuite introduites dans la masse d'enrobage (2) au moyen du support (11; 13).

6. Procédé selon la revendication 5, caractérisé en ce que l'on utilise un support (11; 13) pratiquement rigide.

7. Procédé selon la revendication 5, caractérisé en ce que l'on utilise un support (11, 13) pratiquement flexible.

8. Procédé de fabrication d'un élément de machine ou d'un objet technique équivalent possédant une face dure, portante ou de guidage selon l'une des revendications 1 et 2, dans lequel les corps durs (1) sont disposés sur une base et sont entourés de la masse d'enrobage (2), cette dernière est amenée à se solidifier et la hauteur du substrat qui en résulte est diminuée par enlèvement de matière au point de mettre à jour, sur les corps durs (1), des surfaces capables de former la face dure, portante ou de guidage, caractérisé en ce que le substrat composé de la masse d'enrobage (2) solidifiée et des billes (1) est placée avec la base sur une pièce (G) à munir de la face portante ou de guidage.

9. Procédé selon la revendication 8, caractérisé en ce que l'enlèvement de matière du substrat est réalisé après la mise en place sur la pièce (G).

10. Dispositif pour insérer des billes (1) dans une masse d'enrobage (2) dans le procédé selon l'une des revendications 3 à 7, caractérisé en ce qu'il est prévu au moins une pièce (5) mobile dans un guide (9) par rapport à une autre pièce (G), l'une de ces pièces (5 ou G) comprenant une assise (6, 16), délimitée par un cadre (7, 17) ou analogue et destinée aux billes (1), avant leur inclusion dans la masse d'enrobage (2).

11. Dispositif selon la revendication 10, caractérisé par un cadre (7) ou analogue, délimitant une assise (6, 13) pour les billes (1) et mobile par rapport à cette assise (6, 16).

12. Dispositif selon la revendication 10, caractérisé en ce que l'assise (6, 16) est pourvue d'une couche d'enduit, au moins sur la face recevant les billes (1).

13. Dispositif selon la revendication 10, caractérisé par un support mobile (11, 13) destiné aux billes (1) et muni d'une couche d'enduit (12) au moins sur une face.

14. Dispositif selon la revendication 12, caractérisé en ce que le support (11, 13) est flexible ou souple.

FIG. 3

FIG. 1

FIG. 4

FIG. 2

FIG. 5

FIG. 6

FIG. 7

FIG. 8

FIG. 9

FIG. 10